# EUROPÄISCHE PATENTSCHRIFT

(11) **EP 2 104 627 B1**
(45) Veröffentlichungstag und Bekanntmachung des Hinweises auf die Patenterteilung: **08.05.2013**
(21) Anmeldenummer: 07857009.0
(22) Anmeldetag: 20.12.2007
(51) Int. Cl.: B62K 21/26, B62K 23/04

(54) **GRIFFROHR**
HANDLEBAR GRIP
TUBE DE POIGNÉE

(30) Priorität: 20.12.2006 DE 102006060345
(43) Veröffentlichungstag der Anmeldung: 30.09.2009
(73) Patentinhaber: Gustav Magenwirth GmbH & Co. KG, 72574 Bad Urach (DE)
(72) Erfinder: MAUCH, Johann, 72574 Bad Urach (DE)
(74) Vertreter: Friese, Martin
(86) Internationale Anmeldenummer: PCT/EP2007/011286
(87) Internationale Veröffentlichungsnummer: WO 2008/074510

(56) Entgegenhaltungen:
- EP-A- 0 423 779
- EP-A- 1 553 277
- WO-A-2005/042306
- WO-A1-2005/115824
- DE-A1- 10 027 193
- DE-U1- 29 705 389
- GB-A- 334 731
- JP-A- 11 310 183
- JP-U- 3 050 905
- US-A- 2 776 579

## Beschreibung

Die Erfindung betrifft ein Griffrohr gemäß dem Oberbegriff von Anspruch 1 und einen Gasdrehgriff mit einem derartigen Griffrohr für Fahrzeuge mit einem Verbrennungsmotor.

Gasdrehgriffe sind beispielsweise aus der DE 30 13 008 A1 bekannt. Bei den dort offenbarten Gasdrehgriffen ist das Griffrohr mit einer ein Bowdenzugseil aufnehmenden Seiltrommel verbunden. Mit Hilfe des Bowdenseilzugs wird das Stellglied betätigt. Zum Gasgeben wird das Griffrohr entgegen der Rückstellkraft des Seilzugs gedreht. Wird der Gasdrehgriff losgelassen, dreht sich das Griffrohr wegen der Rückstellkraft zurück in seine Ausgangsstellung (Standgasstellung).

Aus der DE 837 812 C ist ein Fahrraddrehgriff mit einem geschlitzten Griffrohr bekannt, bei dem die Betätigung der Glocke, des Winkers, bzw. der Bremse durch kurzes Hin- und Herdrehen des Drehgriffes erfolgt. Zwischen dem Griffrohr und einer Konusspanneinrichtung ist eine Verdrehfeder mit einer entsprechenden Vorspannung geschaltet, welche den Drehgriff erschütterungsfrei in seiner Endstellung hält. Im Gegensatz dazu weist bei den erfindungsgemäßen Ausführungen das Griffrohr ein offenes äußeres Ende auf und der Raum zur Aufnahme der Rückstellfeder ist durch das Ausgleichsgewicht nach außen verschlossen. Das Ausgleichsgewicht kann dabei erfindungsgemäß einstückig mit dem Lenkerrohr verbunden sein, daran angeschweißt, darin eingepasst, darin verklebt oder anderweitig mit dem Lenkerrohr verbunden sein.

Die AT 2069 U1 offenbart eine Steuereinrichtung zur Drehzahlsteuerung eines elektrischen Fahrradmotors, bei der der Sensor und die Rückholfeder in einem inneren Bereich des Drehgriffs angeordnet sind. Die Rückholfeder ist im Gegensatz zu den Ausführungen gemäß der Erfindung als Druckfeder und nicht als Drehfeder ausgebildet.

Die US-A-5 893 295 offenbart einen Handgriff mit einer Vorrichtung zur automatischen Fahrtkontrolle, bei dem ein Rampenteil mit auf den Rampen laufenden Kugeln vorgesehen ist. Die gewählte Gasstellung wird infolge einer Reibkraft der Vorrichtung zur automatischen Fahrtkontrolle beibehalten. Bei einer Drehung des Handgriffs entgegen der Gasgeberichtung wird die Reibkraft automatisch aufgehoben.

Die WO 2005115824 A1 und die JP 03-50 905 U offenbaren jeweils Handgriffe, bei denen der Sensor innerhalb des Lenkerrohrs angeordnet ist. Bei den Ausführungen der Erfindung ist der Sensor hingegen außerhalb des Lenkerrohrs angeordnet. Das hat den Vorteil, dass kein Stab in dem Lenkerrohr angeordnet sein muss.

Es sind auch Gasdrehgriffe mit Griffrohren bekannt, bei denen die Drehstellung des Gasdrehgriffs in ein elektrisches Signal umgewandelt wird, das zur Betätigung eines Stellglieds verwendet wird, das die Gasstellung beeinflusst. Derartige Griffrohre sind aus der DE 100 27 193 A1 bekannt, auf die der Oberbegriff von Anspruch 1 basiert. Insbesondere kann die dort beschriebene Technik mit den Merkmalen der vorliegenden Erfindung kombiniert werden, wie ein elektrisches Steuersignal erhalten werden kann, das ein Maß für die Drehstellung des Gasdrehgriffs ist. Selbstverständlich können auch andere dem Fachmann bekannte Techniken im Zusammenhang mit der vorliegenden Erfindung verwendet werden, um ein elektrisches Signal zu erhalten, das ein Maß für die Stellung des Gasdrehgriffs ist.

Bei den bekannten Gasdrehgriffen, bei denen die Drehstellung des Griffrohrs in ein elektrisches Signal umgewandelt wird, wird, wie aus der DE 100 27 193 A1 bekannt, der Gasdrehgriff zum Gasgeben entgegen der Wirkung einer Rückstellfeder verdreht. Die Rückstellfeder ist an der lenkermittennahen Seite des Gasdrehgriffs angeordnet und greift mit einem Ende in einen Federeingriffabschnitt des Griffrohrs ein, der in einem lenkermittennahen Bereich des Griffrohrs angeordnet ist. Bei den bekannten Gasdrehgriffen besteht der Nachteil, dass der durch weitere Schaltelemente wie beispielsweise Lichtschalter, Blinkerschalter, Gangschaltung etc. begrenzte Bauraum im Bereich des Daumens des Fahrers für die Anordnung der Rückstellfeder benötigt wird.

Der Erfindung liegt daher die Aufgabe zugrunde, das Griffrohr gemäß dem Oberbegriff von Anspruch 1 derart weiterzubilden, dass Gasdrehgriffe mit Rückstellfedern und elektrischen Stellsignalen bereitgestellt werden können, die im Wesentlichen den gleichen Bauraum wie bekannte Gasdrehgriffe mit mechanischer Betätigung benötigen.

Die Aufgabe der Erfindung wird mit einem Griffrohr gemäß den Merkmalen von Anspruch 1 gelöst. Vorteilhafte Ausgestaltungen der Erfindung sind in den abhängigen Ansprüchen angegeben.

Im Zusammenhang mit dieser Anmeldung bezeichnet der Begriff "äußerer Bereich des Griffrohrs" einen Bereich des Griffrohrs, der bei einem an einen Lenker montierten Griffrohr an der von der Mitte des Lenkers fernen Seite liegt bzw. der bei einem an einem Lenker eines Fahrzeugs montierten Griffrohr an der von der Mitte des Fahrzeugs fernen Seite liegt. Der äußere Bereich des Griffrohrs kann somit auch als "lenkermittenferner Bereich" bzw. "fahrzeugseitennaher Bereich" bezeichnet werden, d.h. ein Bereich, der bei einem an einem Lenker eines Fahrzeugs montierten Griffrohr der Fahrzeugseite nahe ist.

Erfindungsgemäß weist das Griffrohr für einen an einem Lenkerrohr eines Fahrzeug angeordneten Gasdrehgriff zur Betätigung eines Stellglieds, das die Kraftstoffzufuhr für einen Verbrennungsmotor des Fahrzeugs bestimmt, einen Federeingriffabschnitt zum Eingriff einer Rückstellfeder auf, wobei der Federeingriffabschnitt in Längsrichtung des Griffrohrs in einem äußeren Bereich des Griffrohrs ausgebildet ist.

Erfindungsgemäß ergibt sich der Vorteil, dass der begrenzte Bauraum im Bereich des Lenkers seitlich innerhalb des Griffrohrs nicht für die Rückstellfeder benötigt wird. Dadurch kann das Gehäuse kleiner und wie üblich ausgebildet werden. Dadurch ergeben sich geringere Entwicklungs- und Fertigungskosten.

Erfindungsgemäß kann der Montageabschnitt bezogen auf die Längsrichtung des Griffrohrs außerhalb des Sensoraufnahmeanschnitts ausgebildet sein.

Die Erfindung betrifft auch einen Gasdrehgriff mit einem erfindungsgemäßen Griffrohr.

Der erfindungsgemäße Gasdrehgriff weist des Weiteren mindestens eine Rückstellfeder auf. Es können auch mehrere Rückstellfedern oder andere Rückstellmittel vorgesehen sein, die zumindest teilweise im äußeren Bereich des Gasdrehgriffs angeordnet sind.

Erfindungsgemäß kann die Rückstellfeder als eine Drehfeder ausgebildet sein. Dabei kann die Drehfeder als eine Schraubenfeder oder als Drehfederstab ausgebildet sein.

Erfindungsgemäß kann der Gasdrehgriff des Weiteren ein Federgehäuse aufweisen.

Gemäß einer Ausführungsform der Erfindung kann das Federgehäuse an dem Federeingriffabschnitt des Griffrohrs um die Längsachse des Griffrohrs drehbar vorzugsweise mittels einer Schrauben- und/oder Bolzenverbindung befestigt sein.

Erfindungsgemäß kann das Federgehäuse einen Außendurchmesser aufweisen, der im Wesentlichen dem Innendurchmesser des Griffrohrs entspricht. Somit kann der Außendurchmesser des Federgehäuses im Wesentlichen dem Außendurchmesser des Lenkerrohrs entsprechen und stellt eine Verlängerung der Lenkerrohrs dar, auf dem das Griffrohr angeordnet wird.

Erfindungsgemäß kann das Federgehäuse einen Eingriffabschnitt zum verdrehsicheren Eingriff in einen entsprechend ausgebildeten Eingriffabschnitt eines Lenkerrohrs aufweisen. Dabei kann der Eingriffabschnitt des Federgehäuses an der Innenseite des Federgehäuses ausgebildet sein. Weiter kann dabei der Eingriffabschnitt des Federgehäuses Rippen zur Aufnahme in entsprechende an einem Lenkerrohr vorgesehene Aussparungen aufweisen.

Gemäß einer weiteren Ausführungsform der Erfindung kann der Gasdrehgriff des Weiteren ein Lenkergewicht aufweisen, wobei das Federgehäuse in dem Lenkergewicht integriert sein kann. Dabei kann das Lenkergewicht derart ausgebildet sein, dass es verdrehsicher an einem Lenkerrohr befestigbar ist, vorzugsweise mittels einer Schrauben- und/oder Bolzenverbindung.

Gemäß einer weiteren Ausführungsform der Erfindung kann das Federgehäuse in dem bezogen auf den Lenker äußeren Bereich des Lenkerrohrs integriert sein. Dabei kann der Gasdrehgriff auch ein Lenkergewicht aufweisen. Weiter kann dabei das Federgehäuse derart ausgebildet sein, dass es in einen bezogen auf den Lenker äußeren Bereich eines Lenkerrohrs einsetzbar ist.

Erfindungsgemäß kann die Rückstellfeder einen Griffrohreingriffabschnitt zum Eingriff in das Griffrohr und einen Federgehäuseeingriffabschnitt zum Eingriff in das Federgehäuse aufweisen.

Erfindungsgemäß kann der Sensor bzw. können die Sensoren als Winkelsensor, insbesondere als kontaktloser und/oder berührungsloser Winkelsensor und/oder potentiometrischer Winkelsensor und/oder als Hall-Sensor, als Hall-Geber, als Hall-Regler, als gyroskopischer Sensor, als Piezosensor, als Positionssensor, insbesondere als magnetostriktiver Positionssensor, als Winkelencoder, insbesondere als magnetischer Inkrementalencoder, als magnetischer Winkelsensor, insbesondere als Magnetbandsensor, als Wegseilsensor, als induktiver Sensor, als kapazitiver Sensor und/oder als optoelektronischer Winkelsensor ausgebildet sein.

Alternativ oder zusätzlich zu dem Sensor (den Sensoren) kann zumindest ein Drucksensor und können vorzugsweise zwei Drucksensoren zur Messung des von der Rückstellfeder ausgeübten Drucks vorgesehen sein. Dabei können der bzw. die Drucksensoren als Aufnahme eines Endes der Rückstellfeder ausgebildet und angeordnet sein.

Die Erfindung wird im Folgenden anhand der in den Figuren gezeigten Ausführungsbeispiele näher beschrieben.
- Fig. 1: zeigt eine Schnittansicht eines erfindungsgemäßen Griffrohrs in einem erfindungsgemäßen Gasdrehgriff gemäß einer ersten Ausführungsform der Erfindung entlang der Linie I-I von Fig. 4.
- Fig. 2: zeigt einen vergrößerten Ausschnitt von Fig. 1 im Bereich des strichpunktierten Kreises II.
- Fig. 3: zeigt eine Ansicht des Lenkerrohrs mit dem Federgehäuse und der Feder der erfindungsgemäßen Ausführungsform von Fig. 1 von hinten (bezogen auf die Fahrrichtung des Fahrzeugs), wobei die übrigen Teile des Gasdrehgriffs der Übersicht wegen nicht dargestellt sind.
- Fig. 4: zeigt eine Schnittansicht der der erfindungsgemäßen Ausführungsform von Fig. 1 entlang der Linie IV-IV von Fig. 1.
- Fig. 5: zeigt eine Ansicht der erfindungsgemäßen Ausführungsform von Fig. 1 von der Seite (bezogen auf das Fahrzeug von der Fahrzeugmitte), wobei zusätzlich das die Anschlüsse und das Griffrohr aufnehmende Gehäuse dargestellt ist.
- Fig. 6: zeigt eine der Fig. 1 entsprechende Ansicht, wobei zusätzlich das die Anschlüsse und das Griffrohr aufnehmende Gehäuse dargestellt ist.
- Fig. 7: zeigt eine der Fig. 5 entsprechende Ansicht, wobei anstelle des die Anschlüsse und das Griffrohr aufnehmenden Gehäuses ein Lenkerrohr dargestellt ist.
- Fig. 8: zeigt eine Schnittansicht eines erfindungsgemäßen Griffrohrs in einem erfindungsgemäßen Gasdrehgriff gemäß einer zweiten Ausführungsform der Erfindung entlang der Linie VIII-VIII von Fig. 11.
- Fig. 9: zeigt einen vergrößerten Ausschnitt von Fig. 8 im Bereich des strichpunktierten Kreises IX.
- Fig. 10: zeigt eine der Fig. 8 entsprechende Ansicht, wobei nur das Griffrohr und der Griffbezug dargestellt sind.
- Fig. 11: zeigt eine Außenansicht des Gasdrehgriffs von Fig. 8.
- Fig. 12: zeigt eine der Fig. 7 entsprechende Ansicht des Gasdrehgriffs von Fig. 8.
- Fig. 13: zeigt eine Schnittansicht eines erfindungsgemäßen Griffrohrs in einem erfindungsgemäßen Gasdrehgriff gemäß einer dritten Ausführungsform der Erfindung entlang der Linie XIII-XIII von Fig. 16.
- Fig. 14: zeigt einen vergrößerten Ausschnitt von Fig. 13 im Bereich des strichpunktierten Kreises XIV.
- Fig. 15: zeigt eine der Fig. 13 entsprechende Ansicht, wobei nur das Griffrohr und der Griffbezug dargestellt sind.
- Fig. 16: zeigt eine Außenansicht des Gasdrehgriffs von Fig. 13.
- Fig. 17: zeigt eine der Fig. 7 entsprechende Ansicht des Gasdrehgriffs von Fig. 13.
- Fig. 18: zeigt eine Schnittansicht eines erfindungsgemäßen Gasdrehgriffs gemäß einer vierten Ausführungsform der Erfindung entlang der Linie XVIII-XVIII von Fig. 20.
- Fig. 19: zeigt eine Außenansicht des Gasdrehgriffs von Fig. 18.
- Fig. 20: zeigt eine Ansicht der erfindungsgemäßen Ausführungsform von Fig. 18 von der Seite (bezogen auf das Fahrzeug von der Fahrzeugmitte).
- Fig. 21: zeigt eine Schnittansicht des erfindungsgemäßen Gasdrehgriffs von Fig. 18 entlang der Linie XXI-XXI von Fig. 19.
- Fig. 22: zeigt eine Schnittansicht des erfindungsgemäßen Gasdrehgriffs von Fig. 18 entlang der Linie XXII-XXII von Fig. 21.
- Fig. 23: zeigt eine der Fig. 21 entsprechende Ansicht gemäß einer fünften Ausführungsform der Erfindung, bei zumindest ein Drucksensor vorgesehen ist, und die im Übrigen im Wesentlichen der vierten Ausführung der Erfindung entspricht.

In der Beschreibung des Ausführungsbeispiels werden folgende Bezugszeichen verwendet, wobei bei den verschiedenen Ausführungen entsprechende Bezugszeichen um 100 bzw. 200 erhöht sind:

| | |
|---|---|
| 1 | Gasdrehgriff |
| 2 | Lenkerrohr |
| 10 | Griffrohr |
| 11 | Montageabschnitt |
| 12 | Federeingriffabschnitt |
| 13 | Sensoraufnahmeabschnitt |
| 14 | Griffbezug |
| 20 | Rückstellfeder |
| 21 | Griffrohreingriffabschnitt (zum Eingriff der Feder in das Griffrohr) |
| 22 | Federgehäuseeingriffabschnitt (zum Eingriff der Feder in das Federgehäuse) |
| 30 | Federgehäuse (verdrehsicher mit Lenkerrohr) |
| 31 | Fortsatz |
| 32 | Rippe |
| 33 | Schraube |
| 34 | Federeingriffabschnitt |
| 40 | Gehäuse |
| 41 | Innenrand |
| 101 | Gasdrehgriff |
| 102 | Lenkerrohr |
| 110 | Griffrohr |
| 111 | Montageabschnitt |
| 112 | Federeingriffabschnitt |
| 113 | Sensoraufnahmeabschnitt |
| 114 | Griffbezug |
| 120 | Rückstellfeder |
| 121 | Griffrohreingriffabschnitt (zum Eingriff der Feder in das Griffrohr) |
| 122 | Federgehäuseeingriffabschnitt (zum Eingriff der Feder in das in dem Lenkergewicht integrierte Federgehäuse) |
| 130 | Federgehäuse (verdrehsicher mit Lenkerrohr) |
| 133 | Schraube |
| 135 | Lenkergewicht |
| 150 | Scheibe (am Ende des Lenkerrohrs drehsicher angeordnet) |
| 151 | Federeingriffabschnitt |
| 201 | Gasdrehgriff |
| 202 | Lenkerrohr |
| 210 | Griffrohr |
| 211 | Montageabschnitt |
| 212 | Federeingriffabschnitt |
| 213 | Sensoraufnahmeabschnitt |
| 214 | Griffbezug |
| 220 | Rückstellfeder |
| 221 | Griffrohreingriffabschnitt (zum Eingriff der Feder in das Griffrohr) |
| 222 | Federgehäuseeingriffabschnitt (zum Eingriff der Feder in das Federgehäuse) |
| 230 | Federgehäuse (verdrehsicher mit Lenkerrohr) |
| 233 | Schraube |
| 234 | Federeingriffabschnitt |
| 235 | Lenkergewicht |
| 301 | Gasdrehgriff |
| 302 | Lenkerrohr |
| 310 | Griffrohr |
| 312 | Federeingriffabschnitt |
| 314 | Griffbezug |
| 320 | Rückstellfeder |
| 321 | Griffrohreingriffabschnitt (zum Eingriff der Feder in das Griffrohr) |
| 322 | Federgehäuseeingriffabschnitt (zum Eingriff der Feder in das Federgehäuse) |
| 333 | Schraube |
| 334 | Federeingriffabschnitt |
| 335 | Lenkergewicht |
| 401 | Gasdrehgriff |
| 402 | Lenkerrohr |
| 410 | Griffrohr |
| 414 | Griffbezug |
| 421 | Griffrohreingriffabschnitt (zum Eingriff der Rückstellfeder in das Griffrohr) |
| 422 | Federgehäuseeingriffabschnitt (zum Eingriff der Rückstellfeder in das Federgehäuse) |
| 433 | Schraube |
| 434 | Federeingriffabschnitt |
| 441 | Drucksensor |
| 442 | Drucksensor |

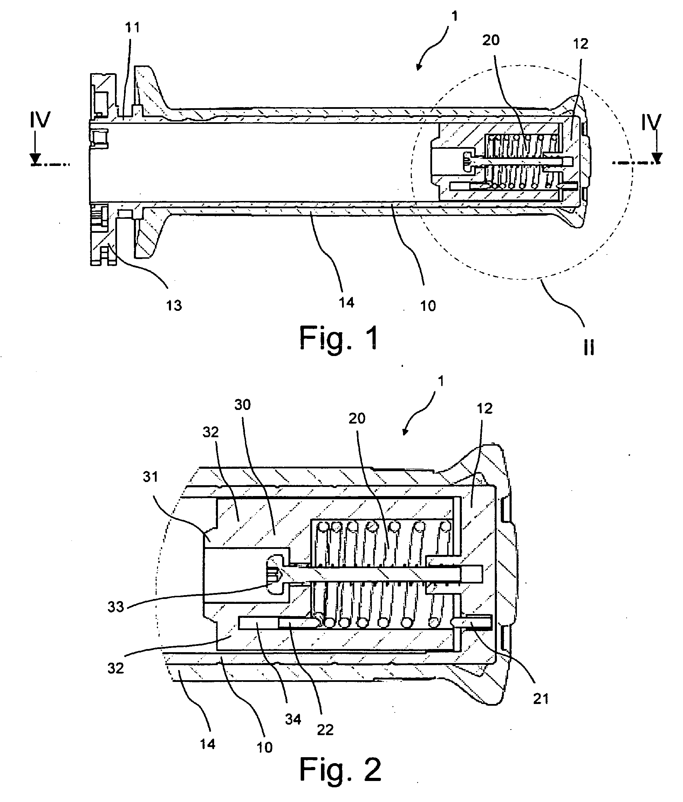

Die Figuren 1 bis 7 zeigen eine erste Ausführungsform der Erfindung.

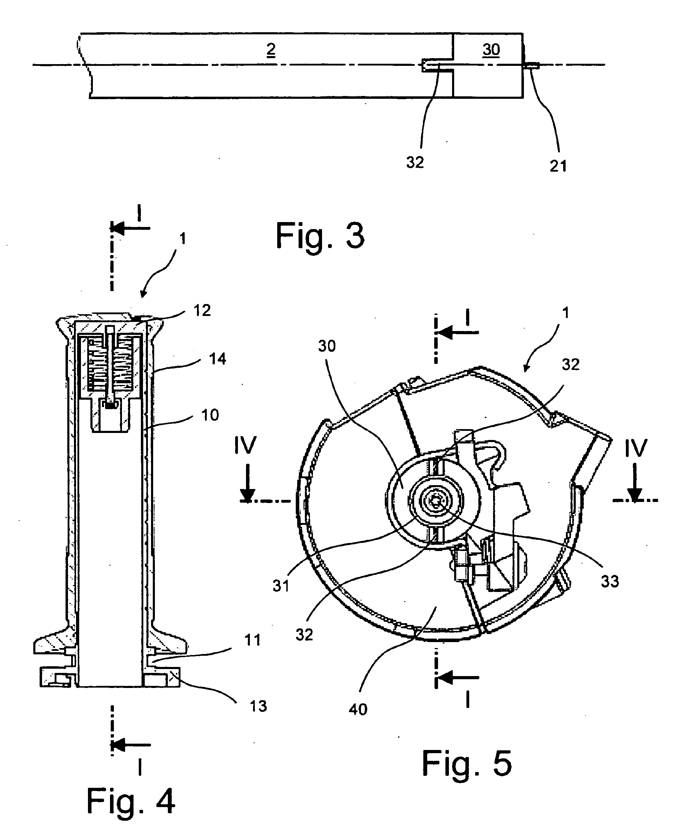

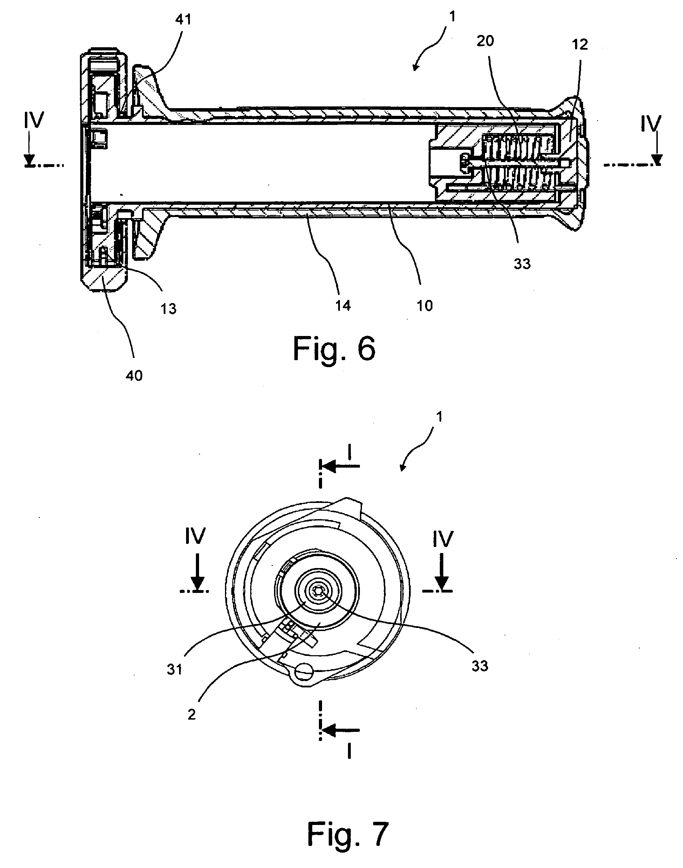

Der erfindungsgemäße Gasdrehgriff wird in den Figuren 1 bis 7 insgesamt mit dem Bezugszeichen 1 bezeichnet und ist geeignet, auf ein Lenkerrohr 2 (siehe Figuren 3 und 7) angeordnet zu werden. Beispielsweise kann der Gasdrehgriff 1 mittels des in den Figuren 5 und 6 gezeigten Gehäuses drehbar an dem Lenkerrohr 2 angebracht werden.

Das erfindungsgemäße Griffrohr 10 ist nicht separat, sondern nur in Zusammenhang mit dem erfindungemäßen Gasdrehgriff dargestellt.

Das Griffrohr 10 weist einen Montageabschnitt 11 (Fig. 1) auf, der als eine Nut ausgebildet ist, in die ein Innenrand 41 des Gehäuses 40 eingreift, wie beispielsweise in Fig. 6 zu sehen ist. Das Gehäuse 40 ist auf bekannte weise an einem Lenkerrohr 2 drehsicher befestigbar. Dadurch kann das Griffrohr 10 auf dem Lenkerrohr verdrehbar und in Axialrichtung unverschiebbar angeordnet werden. Somit kann das Griffrohr auf eine übliche Weise zum Gasgeben um das Lenkerrohr gedreht werden.

Auf dem Griffrohr 10 ist ein Griffbezug 14 angeordnet. Zwischen Griffbezug 14 und Griffrohr kann auf bekannte Weise eine Heizeinrichtung beispielsweise in Form einer Widerstandsfolie oder eines Heizdrahts vorgesehen sein.

Das Griffrohr weist an seiner bezogen auf Fahrzeug inneren Seite einen Sensoraufnahmeabschnitt 13 auf, in dem auf bekannte Weise ein Sensor aufgenommen sein kann, der ein elektrisches Signal ausgibt, das ein Maß für die Drehstellung des Gasdrehgriffs bezogen auf das Lenkerrohr ist und auf bekannte Weise zur Betätigung eines Stellglieds zum Gasgeben an ein entsprechendes Steuergerät weitergeleitet werden kann. Bezüglich der Optionen wird explizit auf die Offenbarung der oben genannten DE 100 27 193 A1 verwiesen, deren Offenbarungshalt durch Bezugnahme insgesamt und insbesondere diesbezüglich hier aufgenommen sein soll.

Der erfindungsgemäße Gasdrehgriff 1 ist auch zur Verwendung ohne mechanische Betätigung des Stellglieds mittels eines Seilzugs vorgesehen. Üblicherweise ist an dem Seilzug eine Druckfeder vorgesehen, die eine Rückstellkraft auf den Gasdrehgriff ausübt, um ihn in die Nullstellung zurückzubringen, wenn der Gasdrehgriff von dem Fahrer losgelassen wird.

Diese Funktion wird von der Rückstellfeder 20 erfüllt. Die Rückstellfeder ist in dem Gasdrehgriff angeordnet, so dass im Gegensatz zu dem Stand der Technik der knapp bemessene Bauraum im Bereich des Gehäuses 40 nicht benötigt wird. Das hat den Vorteil, dass der Bauraum für die übrigen Bauteile zur Verfügung steht und eine optisch gefällige Lösung erreichbar ist.

Das Griffrohr 10 ist an seinem bezogen auf das Fahrzeug äußeren Bereich geschlossen und weist dort einen Federeingriffabschnitt 12 auf in den die Rückstellfeder 20 eingreifen kann.

Die Rückstellfeder 20 ist eine Drehfeder, die in diesem Ausführungsbeispiel als eine Schraubenfeder bzw. Spiralfeder ausgebildet ist. Selbstverständlich sind bei allen dargestellten Ausführungsformen auch andere Federn denkbar, wie beispielsweise Drehfederstäbe oder ähnliches. Ebenso können auch mehrere Federelemente vorgesehen werden. Bevorzugt wird die dargestellte Variante mit einer Drehfeder, durch die ein einfacher Aufbau erreichbar ist.

Die Rückstellfeder 20 ist in einem Federgehäuse 30 aufgenommen und weist einen Griffrohreingriffabschnitt 21 zum Eingriff der Feder in das Griffrohr und einen Federgehäuseeingriffabschnitt 22 zum Eingriff der Feder in einen Federeingriffabschnitt 34 des Federgehäuses 30 auf (Fig. 2).

Das Federgehäuse 30 ist derart ausgebildet, dass es verdrehsicher zu dem Lenkerrohr montiert werden kann. Dazu weist es einen Fortsatz 31 auf, an dem Rippen 32 angeordnet sind, die in entsprechende Aussparungen eingreifen, die an dem Lenkerrohr 2 vorgesehen sind. Das Federgehäuse 30 ist mittels einer Schraube 33 an dem Federeingriffabschnitt 12 des Griffrohrs 10 drehbar befestigt.

Der Gasdrehgriff 1 kann als vormontierte Einheit mit oder ohne Gehäuse 40 bereitgestellt werden. Die Rückstellfeder 20 kann in dem Federgehäuse 30 vormontiert werden. Dazu kann die Rückstellfeder 20 in das Federgehäuse 30 derart eingesetzt werden, dass der Federgehäuseeingriffabschnitt 22 in einen entsprechenden Federeingriffabschnitt des Federgehäuses 30 eingreift. Das Federgehäuse 30 kann dann mit der Rückstellfeder in dem Griffrohr 10 vormontiert werden. Dazu kann der Griffrohreingriffabschnitt 21 der Rückstellfeder 20 in einen entsprechenden Federeingriffabschnitt 12 des Griffrohrs 10 eingeführt werden und das Federgehäuse 30 an dem Griffrohr 10 mittels der Schraube 33 drehbar befestigt werden.

Wenn der Gasdrehgriff 1 später an dem Lenkerrohr 2 montiert wird, ist darauf zu achten, dass die an dem Federgehäuse angebrachten Verdrehsicherungen (z.B. die Rippen 32) richtig zu den entsprechenden Ausnehmungen (oder Fortsätzen etc. bei anderen denkbaren Verdrehsicherungen) positioniert sind. Die Rückstellfeder 20 wird anschließend durch Drehen des Gasdrehgriffs 1 in eine bestimmte gewünschte Position vorgespannt, in der der Gasdrehgriff 1 durch Festschrauben des Gehäuses 40 an dem Lenkerrohr 2 gesichert wird. Das Griffrohr 10 des Gasdrehgriffs 1 ist dann in einer Richtung aus seiner Nullstellung (Standgasstellung) verdrehbar und kehrt wegen der Rückstellkraft der Rückstellfeder in diese Stellung beispielsweise beim Loslassen des Gasdrehgriffs zurück.

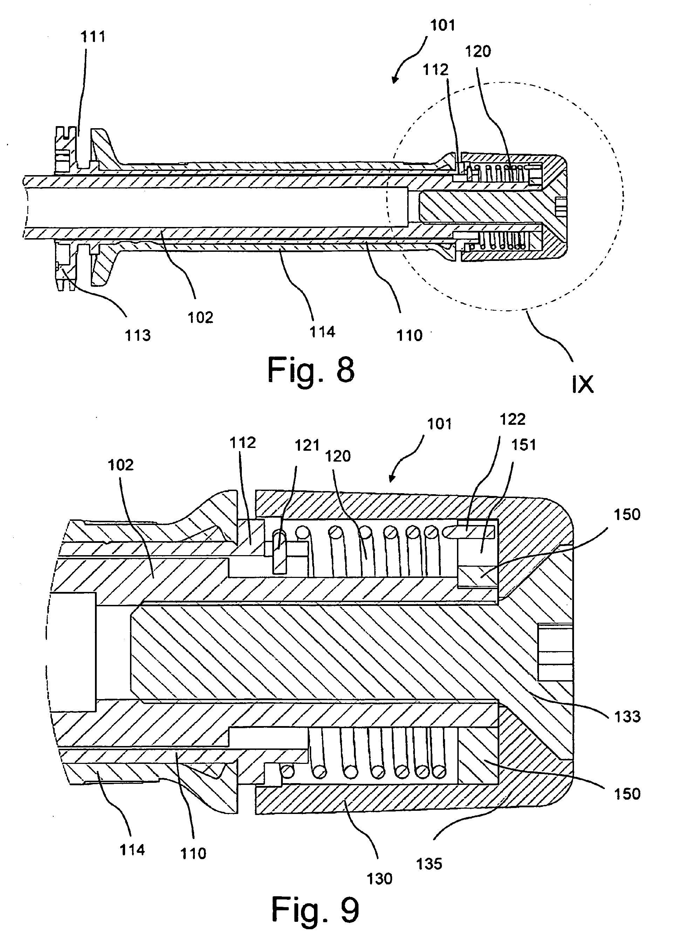

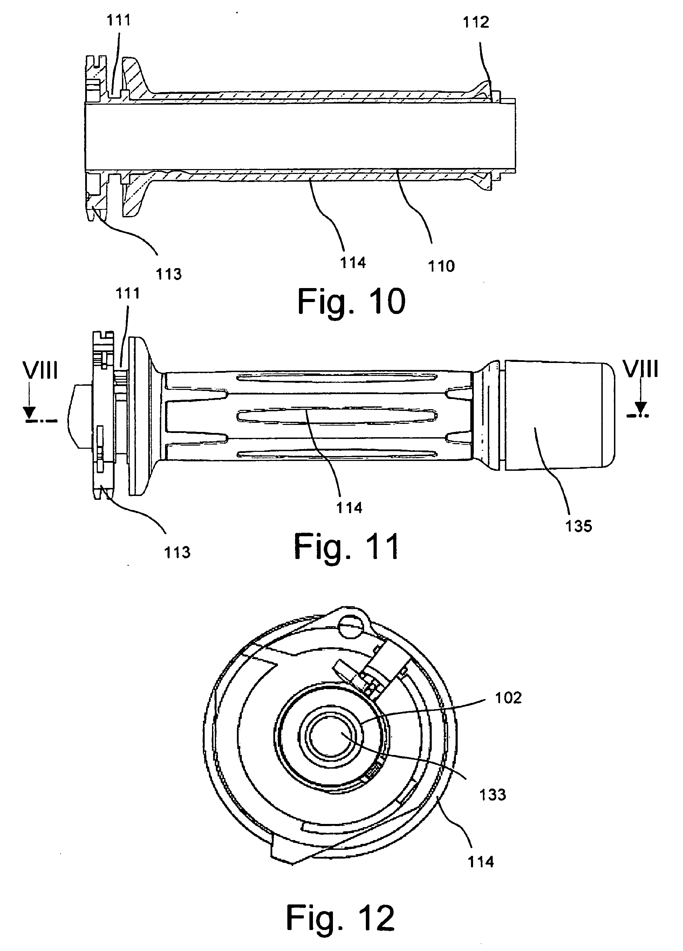

Die Figuren 8 bis 12 zeigen eine zweite Ausführungsform der Erfindung. Gleiche bzw. entsprechende Teile sind im Vergleich zu der vorherigen Ausführungsform mit den gleichen aber um 100 erhöhten Bezugszeichen bezeichnet. Im Folgenden werden die Unterschiede der in den Figuren 8 bis 12 gezeigten Ausführungsform zu der ersten in den Figuren 1 bis 7 gezeigten und oben beschriebenen Ausführungsform beschrieben. Im Übrigen wird auf die obige Beschreibung der ersten Ausführungsform verweisen.

Bei der in den Figuren 8 bis 12 gezeigten Ausführungsform ist das Federgehäuse 130 in einem Lenkergewicht 135 integriert, das mittels einer Schraube 133 an dem Lenkerrohr befestigbar ist.

Die Verdrehsicherung der Rückstellfeder 120 gegenüber dem Lenkerrohr 102 wird durch eine am Ende des Lenkerrohrs 102 verdrehsicher angebrachte Scheibe 150 realisiert, die einen Federeingriffabschnitt 151 aufweist.

Die Rückstellfeder 120 ist außerhalb (d.h. bezogen auf das Fahrzeug seitlich außerhalb) des Griffrohrs 110 in dem in dem Lenkergewicht 135 integrierten Federgehäuse 130 angeordnet. Die Rückstellfeder 120 weist einen Griffrohreingriffabschnitt 121 zum Eingriff der Rückstellfeder 120 in das Griffrohr 110 und einen Federgehäuseeingriffabschnitt 122 zum Eingriff der Rückstellfeder in den in der Scheibe 150 integrierten Federeingriffabschnitt 151 auf.

Zur Montage wird der Griffrohreingriffabschnitt 121 der Rückstellfeder 120 in der entsprechenden Aussparung des Griffrohrs 110 angeordnet und der Federgehäuseeingriffabschnitt 122 der Rückstellfeder 120 wird in dem entsprechenden Federeingriffabschnitt des Lenkergewichts 135 (Federgehäuses 130) angeordnet.

Die Rückstellfeder 120 wird anschließend durch Drehen des Gasdrehgriffs 101 in eine bestimmte gewünschte Position vorgespannt, in der der Gasdrehgriff 101 durch Befestigen des nicht dargestellten Gehäuses (siehe erstes Ausführungsbeispiel, Gehäuse 40) an dem Lenkerrohr 102 gesichert wird.

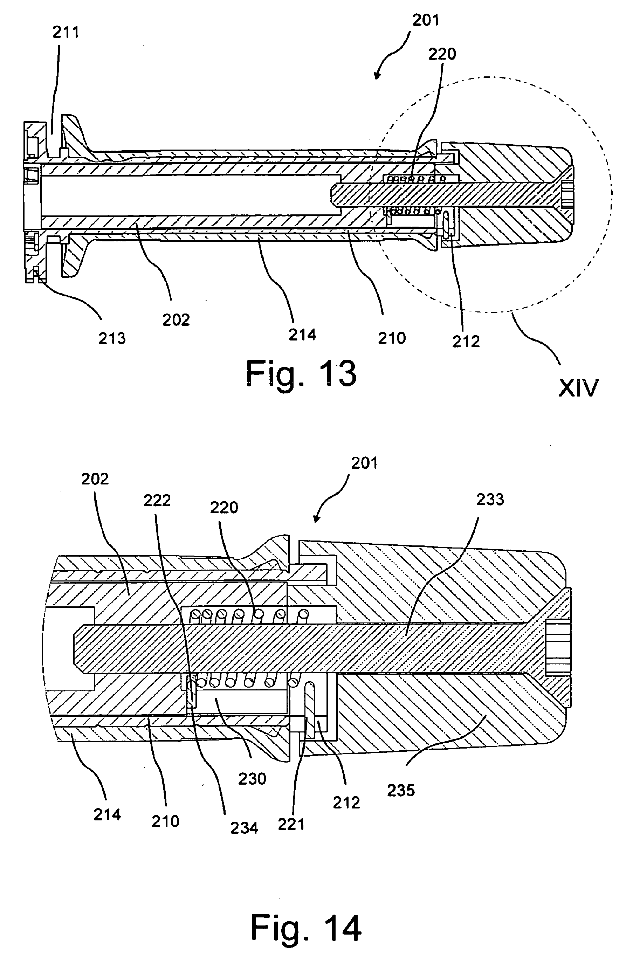

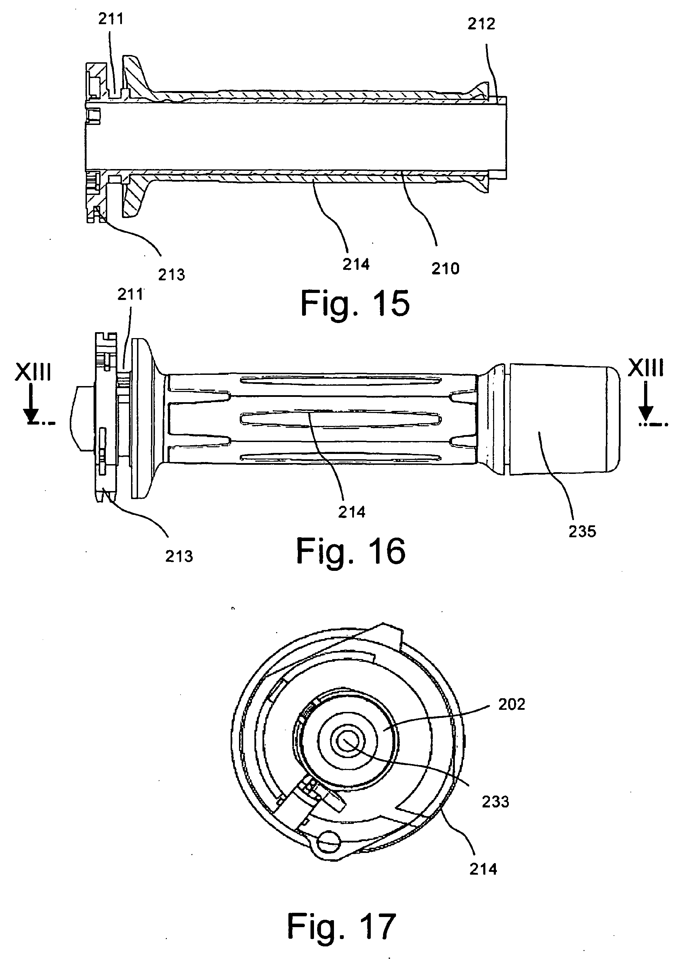

Die Figuren 13 bis 17 zeigen eine dritte Ausführungsform der Erfindung. Gleiche bzw. entsprechende Teile sind im Vergleich zu den vorherigen Ausführungsformen mit den gleichen aber um 100 bzw. 200 erhöhten Bezugszeichen bezeichnet. Im Folgenden werden die unterschiede der in den Figuren 13 bis 17 gezeigten Ausführungsform zu den ersten beiden in den Figuren 1 bis 7 bzw. 8 bis 12 gezeigten und oben beschriebenen Ausführungsformen beschrieben. Im Übrigen wird auf die obige Beschreibung der beiden ersten Ausführungsformen verweisen.

Bei der in den Figuren 13 bis 17 gezeigten Ausführungsform ist das Federgehäuse 230 in dem Lenkerrohr 202 integriert. Mit anderen Worten ist die Rückstellfeder 220 in dem Lenkerrohr 202 angeordnet und greift dort beispielsweise in einen Mitnehmer ein, der fest auf dem Lenkerrohr 202 positioniert ist.

Die Rückstellfeder 220 ist innerhalb des Griffrohrs in dem Lenkerrohr 202 angeordnet, das dort als Federgehäuse 230 ausgebildet ist. Die Rückstellfeder 220 weist einen Griffrohreingriffabschnitt 221 zum Eingriff der Rückstellfeder 220 in das Griffrohr 210 und einen Lenkerrohreingriffabschnitt 222 zum Eingriff der Rückstellfeder 220 in das Lenkerrohr 202 auf.

Zur Montage wird der Griffrohreingriffabschnitt 221 der Rückstellfeder 220 in der entsprechenden Aussparung des Griffrohrs 210 angeordnet und der Lenkerrohreingriffabschnitt 222 der Rückstellfeder 220 wird in einem entsprechenden Federeingriffabschnitt des Lenkerrohrs 202 (Federgehäuses 230) angeordnet.

Die Rückstellfeder 220 wird anschließend durch Drehen des Gasdrehgriffs 201 in eine bestimmte gewünschte Position vorgespannt, in der der Gasdrehgriff 201 durch Befestigen des nicht dargestellten Gehäuses (siehe erstes Ausführungsbeispiel, Gehäuse 40) an dem Lenkerrohr 202 gesichert wird.

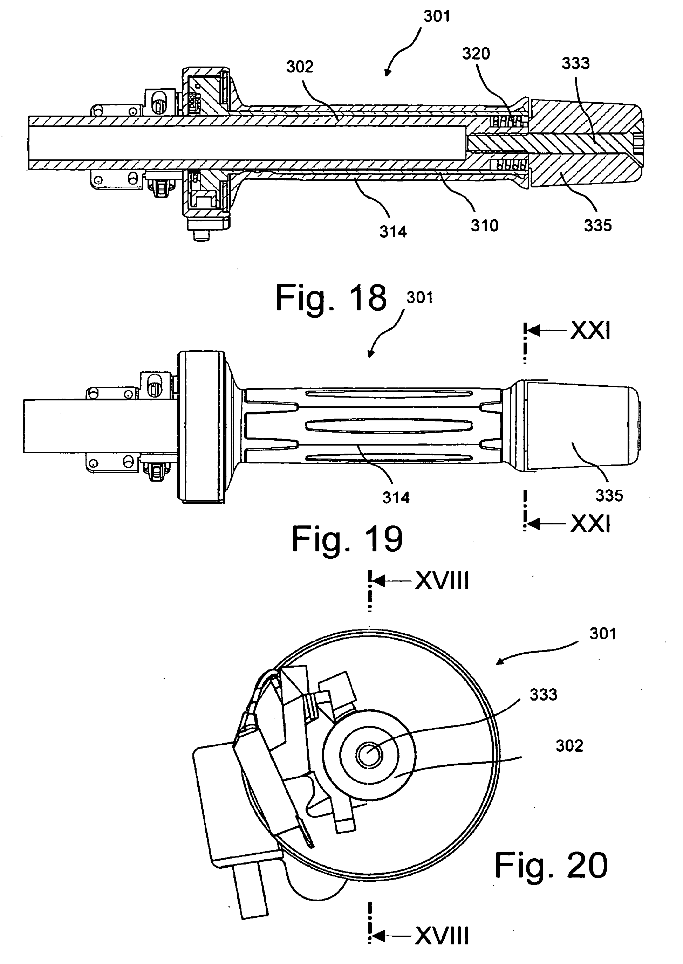

Die Figuren 18 bis 22 zeigen eine vierte Ausführungsform der Erfindung. Gleiche bzw. entsprechende Teile sind im Vergleich zu den vorherigen Ausführungsformen mit den gleichen aber um 100, 200 bzw. 300 erhöhten Bezugszeichen bezeichnet. Im Folgenden werden die Unterschiede der in den Figuren 18 bis 22 gezeigten Ausführungsform zu den ersten drei in den Figuren 1 bis 7, 8 bis 12 bzw. 13 bis 17 gezeigten und oben beschriebenen Ausführungsformen beschrieben. Im Übrigen wird auf die obige Beschreibung der vorherigen drei Ausführungsformen verweisen.

Die in den Figuren 18 bis 22 gezeigte Ausführungsform der Erfindung entspricht im wesentlichen der in den Figuren 13 bis 17 gezeigten Ausführungsform der Erfindung. Bei den Zeichnungen der in den Figuren 18 bis 22 gezeigten Ausführungsform sind an dem Lenkerrohr angebrachte Komponenten gezeigt, die bei der in den Figuren 13 bis 17 gezeigten Ausführungsform der Übersichtlichkeit halber nicht dargestellt sind. Des Weiteren ist bei der in den Figuren 18 bis 22 dargestellten Ausführungsform der Erfindung immer das Lenkerrohr 302 dargestellt. Daher wird insbondere auf die Beschreibung des in den Figuren 13 bis 17 gezeigten Ausführungsbeispiels verwiesen, wobei gleiche Bauteile mit einem um 100 erhöhten Bezugszeichen bezeichnet, bzw. nicht noch einmal explizit bezeichnet sind.

Im Unterschied zu dem in den Figuren 13 bis 17 gezeigten Ausführungsbeispiel ragt bei dem in den Figuren 18 bis 22 gezeigten Ausführungsbeispiel die Rückstellfeder 320 nicht in das Lenkergewicht 335 hinein. Das Lenkergewicht 335 weist im Gegensatz zu dem Lenkergewicht 235 keine Aussparung auf, in die die Rückstellfeder 220 ragt. Ebenso erstreckt sich das Lenkerrohr 302 in Richtung des Lenkergewichts 335 im Wesentlichen genauso weit, wie das Griffrohr 310. Mit anderen Worten ist der Federraum zwischen dem Lenkerrohr 302 und dem Griffrohr 310 ausgebildet und wird stirnseitig durch das Lenkergewicht 335 verschlossen. Bei der Ausführung der Figuren 13 bis 17 ist der Federraum ebenfalls zwischen dem Lenkerrohr 202 und dem Griffrohr 210 ausgebildet. Er erstreckt sich jedoch noch etwas in das Lenkergewicht 235, wobei sich das Lenkerrohr 202 ebenfalls in das Lenkergewicht erstreckt. Das Lenkergewicht 235 schließt den Federraum stirnseitig ab und bildet in dem an die Stirnseite anschließenden seitlichen Bereich eine seitliche Begrenzung des Federraums.

Bei der Ausführung der Figuren 13 bis 17 ist der Federeingriffabschnitt 212 in einem Bereich ausgebildet, der von dem Lenkergewicht umschlossen ist, während bei der Ausführung der Figuren 18 bis 22 der Federeingriffabschnitt 312 in einem Bereich ausgebildet ist, der von dem Griffbezug 314 umschlossen ist.

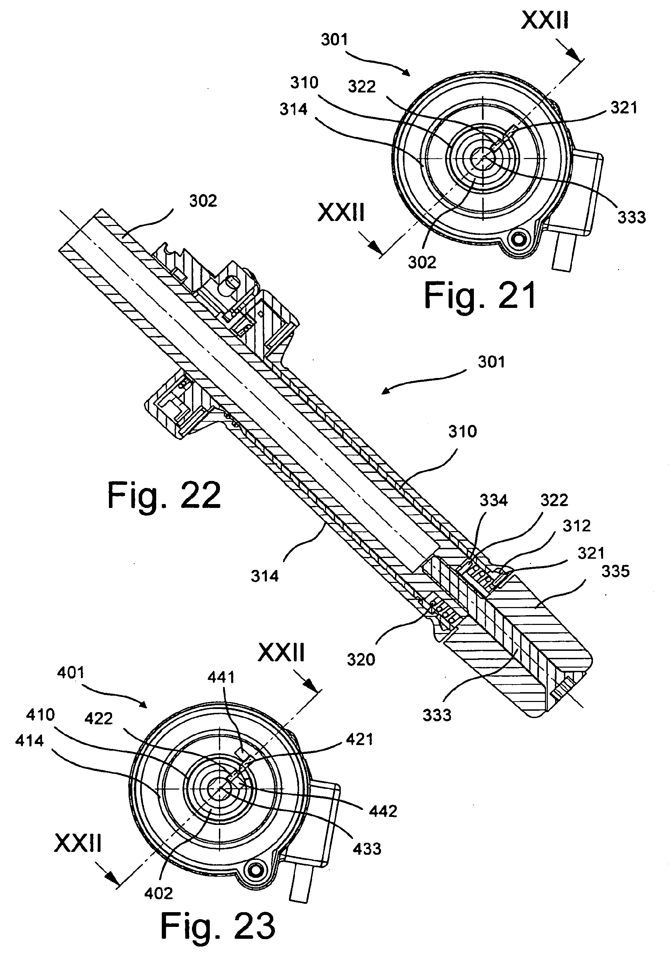

Die in Fig. 23 gezeigte Ausführung der Erfindung entspricht im wesentlichen der in den Figuren 18 bis 22 gezeigten Ausführung der Erfindung, auf deren Beschreibung und Figuren verwiesen wird, wobei die Ansichten der Figuren 18 bis 20 und 22 identisch sind, und sich die Ansichten der Figuren 21 und 23 bis auf die im folgenden genannten Unterschiede entsprechen, wobei die Bezugszeichen der sich entsprechenden Bauteile bei der Ausführung von Fig. 23 um 100 erhöht sind.

Die in Fig. 23 gezeigte Ausführung weist Drucksensoren 441, 442 auf, die an den Enden (Griffrohreingriffabschnitt 421 bzw. Federgehäuseeingriffabschnitt 422) der Rückstellfeder angreifen und die von der Enden der Rückstellfeder ausgeübten Druck bestimmen, der ein Maß für den Verdrehwinkel des Drehgriffs ist. Vorzugsweise sind an beiden Enden der Rückstellfeder Drucksensoren 441, 442 vorgesehen. Durch die beiden Messwerte ergibt sich eine höhere Genauigkeit. Selbstverständlich kann auch nur ein Drucksensor 441 oder 442 vorgesehen sein, so dass nur die an einem Ende der Rückstellfeder ausgeübte Kraft bestimmt wird.

Bei der in Fig. 23 gezeigten Ausführung der Erfindung können die Drucksensoren 441 bzw. 442 alternativ oder zusätzlich zu den anderen Sensoren vorgesehen sein.

## Patentansprüche

1. Griffrohr (10, 110, 210) für einen an einem Lenkerrohr (2, 102, 202) eines Fahrzeugs angeordneten Gasdrehgriff (1, 101, 201) zur Betätigung eines Stellglieds, das die Kraftstoffzufuhr für einen Verbrennungsmotor des Fahrzeugs bestimmt,
wobei das Griffrohr (10, 110, 210) einen Montageabschnitt (11, 111, 211), um das Griffrohr (10, 110, 210) auf dem Lenkerrohr (2, 102, 202) verdrehbar und in Axialrichtung unverschiebbar anzuordnen, einen Federeingriffabschnitt (12, 112, 212) zum Eingriff einer Rückstellfeder (20, 120, 220) und einen Sensoraufnahmeabschnitt (13, 113, 213) zur Aufnahme eines Sensors zur Erfassung der Drehstellung des Griffrohrs (10, 110, 210) aufweist,
**dadurch gekennzeichnet, dass** der Federeingriffabschnitt (12, 112, 212) in Längsrichtung des Griffrohrs in einem äußeren Bereich des Griffrohrs (10, 110, 210) ausgebildet ist, und der Federeingriffabschnitt (12, 112, 212) und der Sensoraufnahmeabschnitt (13, 113, 213) bezogen auf die Längsrichtung des Griffrohrs an sich gegenüberliegenden Endbereichen des Griffrohrs (10, 110, 210) ausgebildet sind.

2. Griffrohr nach Anspruch 1, bei dem der Montageabschnitt (11, 111, 211) bezogen auf die Längsrichtung des Griffrohrs (10, 110, 210) außerhalb des Sensoraufnahmeanschnitts (13, 113, 213) ausgebildet ist.

3. Gasdrehgriff mit einem Griffrohr (10, 110, 210, 310, 410) nach einem der vorhergehenden Ansprüche, bei dem die Rückstellfeder (20, 120, 220, 320) als eine Drehfeder und/oder als eine Schraubenfeder oder als ein Drehfederstab ausgebildet ist.

4. Gasdrehgriff nach Anspruch 3, des Weiteren mit einem Federgehäuse (30, 130, 230).

5. Gasdrehgriff nach Anspruch 4, bei dem das Federgehäuse (30, 130, 230) an dem Federeingriffabschnitt (12, 112, 212) des Griffrohrs (10, 110, 210) um die Längsachse des Griffrohrs (10, 110, 210) drehbar befestigt ist.

6. Gasdrehgriff nach einem der Ansprüche 3 bis 5, wobei das Federgehäuse (30, 130, 230) einen Außendurchmesser aufweist, der im Wesentlichen dem Innendurchmesser des Griffrohrs (10, 110, 210) entspricht.

7. Gasdrehgriff nach einem der Ansprüche 4 bis 6, bei dem das Federgehäuse (30, 130, 230) einen Eingriffabschnitt zum verdrehsicheren Eingriff in einen entsprechend ausgebildeten Eingriffabschnitt eines Lenkerrohrs (2, 102, 202, 302, 402) aufweist.

8. Gasdrehgriff nach einem der Ansprüche 4 bis 7, bei dem der Eingriffabschnitt des Federgehäuses (30, 130, 230) an der Innenseite des Federgehäuses (30, 130, 230) ausgebildet ist und/oder Rippen zur Aufnahme in entsprechende an einem Lenkerrohr (2, 102, 202, 302, 402) vorgesehene Aussparungen aufweist.

9. Gasdrehgriff nach einem der Ansprüche 4 bis 8, des Weiteren mit einem Lenkergewicht (135, 235, 335), wobei das Federgehäuse (30, 130, 230) in dem Lenkergewicht (135, 235, 335) integriert ist.

10. Gasdrehgriff nach dem Anspruch 9, bei dem das Lenkergewicht (135, 235, 335) derart ausgebildet ist, dass es verdrehsicher an einem Lenkerrohr (2, 102, 202, 302, 402) befestigbar ist.

11. Gasdrehgriff nach einem der Ansprüche 4 bis 10, bei dem das Federgehäuse (30, 130, 230) in dem bezogen auf den Lenker äußeren Bereich des Lenkerrohrs (2, 102, 202, 302, 402) integriert ist und/oder derart ausgebildet ist, dass es in einen bezogen auf den Lenker äußeren Bereich eines Lenkerrohrs (2, 102, 202, 302, 402) einsetzbar ist.

12. Gasdrehgriff nach einem der Ansprüche 4 bis 11, bei dem die Rückstellfeder (20, 120, 220, 320) einen Griffrohreingriffabschnitt (21, 121, 221, 321, 421) zum Eingriff in das Griffrohr (10, 110, 210, 310, 410) und einen Federgehäuseeingriffabschnitt zum Eingriff in das Federgehäuse (30, 130, 230) aufweist.

13. Gasdrehgriff nach einem der Ansprüche 4 bis 12, bei dem der Sensor als Winkelsensor, als kontaktloser Winkelsensor, als berührungsloser Winkelsensor, als potentiometrischer Winkelsensor, als Hall-Sensor, als Hall-Geber, als Hall-Regler, als gyroskopischer Sensor, als Piezosensor, als Positionssensor, als magnetostriktiver Positionssensor, als Winkelencoder, als magnetischer Inkrementalencoder, als magnetischer Winkelsensor, als Magnetbandsensor, als Wegseilsensor, als induktiver Sensor, als kapazitiver Sensor und/oder als optoelektronischer Winkelsensor ausgebildet ist.

14. Gasdrehgriff nach einem der Ansprüche 4 bis 13, bei dem zumindest ein Drucksensor (441, 442) und vorzugsweise zwei Drucksensoren (441, 442) zur Messung des von der Rückstellfeder (20, 120, 220, 320) ausgeübten Drucks vorgesehen sind.

15. Gasdrehgriff nach Anspruch 14, bei dem der bzw. die Drucksensoren (441, 442) vorzugsweise als Aufnahme eines Endes der Rückstellfeder (20, 120, 220, 320) ausgebildet und angeordnet sind.

## Claims

1. Grip tube (10, 110, 210) for an accelerator twist grip (1, 101, 201) arranged at a handlebar tube (2, 102, 202) of a vehicle for actuating an actuator which determines the fuel supply for an internal combustion engine of the vehicle,
wherein the grip tube (10, 110, 210) has an assembly portion (11, 111, 211) to arrange the grip tube (10, 110, 210) on the handlebar tube (2, 102, 202) so as to be rotatory and non-slidable in an axial direction, a spring engaging portion (12, 112, 212) for the engagement of a return spring (20, 120, 220), and a sensor receiving portion (13, 113, 213) for receiving a sensor to detect the rotational position of the grip tube (10, 110, 210),
**characterized in that** the spring engaging portion (12, 112, 212) is formed in the longitudinal direction of the grip tube in an outer region of the grip tube (10, 110, 210) and, based on the longitudinal direction of the grip tube, the spring engaging portion (12, 112, 212) and the sensor receiving portion (13, 113, 213) are formed on opposite end regions of the grip tube (10, 110, 210).

2. Grip tube according to claim 1, wherein the assembly portion (11, 111, 211) is formed outside the sensor receiving portion (13, 113, 213), based on the longitudinal direction of the grip tube (10, 110, 210).

3. Accelerator twist grip having a grip tube (10, 110, 210, 310, 410) according to any of the preceding claims, wherein the return spring (20, 120, 220, 320) is designed as a torsion spring and/or as a helical spring or as a torsion bar.

4. Accelerator twist grip according to claim 3, further comprising a spring housing (30, 130, 230).

5. Accelerator twist grip according to claim 4, wherein the spring housing (30, 130, 230) is rotatably mounted on the spring engaging portion (12, 112, 212) of the grip tube (10, 110, 210) about the longitudinal axis of the grip tube (10, 110, 210).

6. Accelerator twist grip according to any of claims 3 to 5, wherein the spring housing (30, 130, 230) has an external diameter which corresponds substantially to the internal diameter of the grip tube (10, 110, 210).

7. Accelerator twist grip according to any of claims 4 to 6, wherein the spring housing (30, 130, 230) has an engaging portion for the twist-proof engagement in a correspondingly formed engaging portion of a handlebar tube (2, 102, 202, 302, 402).

8. Accelerator twist grip according to any of claims 4 to 7, wherein the engaging portion of the spring housing (30, 130, 230) is formed on the inner side of the spring housing (30, 130, 230) and/or has ribs for reception in corresponding recesses provided at a handlebar tube (2, 102, 202, 302, 402).

9. Accelerator twist grip according to any of claims 4 to 8, further comprising a handlebar weight (135, 235, 335), wherein the spring housing (30, 130, 230) is integrated in the handlebar weight (135, 235, 335).

10. Accelerator twist grip according to claim 9, wherein the handlebar weight (135, 235, 335) is designed in such a way that it can be attached to a handlebar tube (2, 102, 202, 302, 402) in a twist-proof fashion.

11. Accelerator twist grip according to any of claims 4 to 10, wherein the spring housing (30, 130, 230) is integrated in the outer region of the handlebar tube (2, 102, 202, 302, 402), based on the handlebar, and/or is made so as to be usable in an outer region of a handlebar tube (2, 102, 202, 302, 402), based on the handlebar.

12. Accelerator twist grip according to any of claims 4 to 11, wherein the return spring (20, 120, 220, 320) has a grip tube engaging portion (21, 121, 221, 321, 421) for engagement in the grip tube (10, 110, 210, 310, 410) and a spring housing engaging portion for engagement in the spring housing (30, 130, 230).

13. Accelerator twist grip according to any of claims 4 to 12, wherein the sensor is designed as an angle sensor, as a contactless angle sensor, as a non-contact angle sensor, as a potentiometric angle sensor, as a Hall sensor, as a Hall transducer, as a Hall controller, as a gyroscopic sensor, as a piezo sensor, as a position sensor, as a magnetostrictive position sensor, as an angle encoder, as a magnetic incremental encoder, as a magnetic angle sensor, as a magnetic tape sensor, as a cable actuated position sensor, as an inductive sensor, as a capacitive sensor and/or as an optoelectronic angle sensor.

14. Accelerator twist grip according to any of claims 4 to 13, wherein at least one pressure sensor (441, 442) and preferably two pressure sensors (441, 442) are provided for measuring the pressure exerted by the return spring (20, 120, 220, 320).

15. Accelerator twist grip according to claim 14, wherein the pressure sensor/s (441, 442) is/are preferably made and arranged as a reception of an end of the return spring (20, 120, 220, 320).

## Revendications

1. Tube-manette (10, 110, 210) pour une manette rotative d'accélérateur (1, 101, 201) agencée dans un tube de direction (2, 102, 202) d'un véhicule, pour l'actionnement d'un organe de positionnement qui détermine l'amenée de carburant pour un moteur à combustion interne du véhicule,
dans lequel le tube-manette (10, 110, 210) comprend un tronçon de montage (11, 111, 211), afin de pouvoir agencer le tube-manette (10, 110, 210) avec possibilité de rotation sur le tube de direction (2, 102, 202) mais sans possibilité de déplacement en direction axiale, un tronçon d'engagement de ressort (12, 112, 212) pour l'engagement d'un ressort de rappel (20, 120, 220) et un tronçon de réception de capteur (13, 113, 213) pour la réception d'un capteur destiné à détecter la position en rotation du tube-manette (10, 110, 210),
**caractérisé en ce que** le tronçon d'engagement de ressort (12, 112, 212) est réalisé en direction longitudinale du tube-manette dans une zone extérieure du tube-manette (10, 110, 210), et le tronçon d'engagement de ressort (12, 112, 212) et le tronçon de réception de capteur (13, 113, 213) sont réalisés sur des zones terminales mutuellement opposées, par référence à la direction longitudinale du tube-manette, du tube-manette (10, 110, 210).

2. Tube-manette selon la revendication 1, dans lequel le tronçon de montage (11, 111, 211) est réalisé à l'extérieur du tronçon de réception de capteur (13, 113, 213), par référence à la direction longitudinale du tube-manette (10, 110, 210).

3. Manette rotative d'accélérateur comprenant un tube-manette (10, 110, 210, 310, 410) selon l'une des revendications précédentes, dans laquelle le ressort de rappel (20, 120, 220, 320) est réalisé comme un ressort rotatif et/ou comme un ressort hélicoïdal ou encore comme un barreau-ressort de torsion.

4. Manette rotative d'accélérateur selon la revendication 3, comprenant en outre un boîtier de ressort (30, 130, 230).

5. Manette rotative d'accélérateur selon la revendication 4, dans laquelle le boîtier de ressort (30, 130, 230) est fixé sur le tronçon d'engagement de ressort (12, 112, 212) du tube-manette (10, 110, 210) avec possibilité de rotation autour de l'axe longitudinal du tube-manette (10, 110, 210).

6. Manette rotative d'accélérateur selon l'une des revendications 3 à 5, dans laquelle le boîtier de ressort (30, 130, 230) présente un diamètre extérieur qui correspond sensiblement au diamètre intérieur du tube-manette (10, 110, 210).

7. Manette rotative d'accélérateur selon l'une des revendications 4 à 6, dans lequel le boîtier de ressort (30, 130, 230) comprend un tronçon d'engagement destiné à un engagement antirotation dans un tronçon d'engagement de réalisation correspondante d'un tube de direction (2, 102, 200, 302, 402).

8. Manette rotative d'accélérateur selon l'une des revendications 4 à 7, dans laquelle le tronçon d'engagement du boîtier de ressort (30, 130, 230) est réalisé sur le côté intérieur du boîtier de ressort (30, 130, 230) et/ou comporte des nervures destinées à être reçues dans des évidements correspondants prévus sur un tube de direction (2, 102, 202, 302, 402).

9. Manette rotative d'accélérateur selon l'une des revendications 4 à 8, comprenant en outre un poids de direction (135, 235, 335), dans laquelle le boîtier de ressort (30, 130, 230) est intégré dans le poids de direction (135, 235, 335).

10. Manette rotative d'accélérateur selon la revendication 9, dans laquelle le poids de direction (135, 235, 335) est réalisé de telle manière qu'il peut être fixé de manière antirotation sur un tube de direction (2, 102, 202, 302, 402).

11. Manette rotative d'accélérateur selon l'une des revendications 4 à 10, dans laquelle le boîtier de ressort (30, 130, 230) est intégré dans la zone extérieure, par référence à la direction, du tube de direction (2, 102, 202, 302, 402), et/ou est réalisé de telle façon qu'il peut être mis en place dans une zone extérieure, par référence à la direction, d'un tube de direction (2, 102, 202, 302, 402).

12. Manette rotative d'accélérateur selon l'une des revendications 4 à 11, dans laquelle le ressort de rappel (20, 120, 220, 320) comprend un tronçon d'engagement de tube-manette (21, 121, 221, 321, 421) pour l'engagement dans le tube-manette (10, 110, 210, 310, 410) et un tronçon d'engagement de boîtier de ressort pour l'engagement dans le boîtier de ressort (30, 130, 230).

13. Manette rotative d'accélérateur selon l'une des revendications 4 à 12, dans laquelle le capteur est réalisé sous forme de capteur angulaire, de capteur angulaire sans contact, de capteur angulaire sans appui, de capteur angulaire potentiométrique, de capteur de Hall, d'émetteur de Hall, de régulateur de Hall, de capteur gyroscopique, de capteur piézoélectrique, de capteur de position, de capteur de position magnétostrictif, de codeur angulaire, de codeur incrémental magnétique, de capteur angulaire magnétique, de capteur à ruban magnétique, de capteur de course à câble, de capteur inductif, de capteur capacitif et/ou de capteur angulaire optoélectronique.

14. Manette rotative d'accélérateur selon l'une des revendications 4 à 13, dans laquelle il est prévu au moins un capteur de pression (441, 442) et de préférence deux capteurs de pression (441, 442) pour la mesure de la pression exercée par le ressort de rappel (20, 120, 220, 320).

15. Manette rotative d'accélérateur selon la revendication 14, dans laquelle le ou les capteur(s) de pression (41 441, 442) est/sont réalisé(s) et agencé(s) de préférence sous forme de logement d'une extrémité du ressort de rappel (20, 120, 220, 320).
